# EUROPEAN PATENT SPECIFICATION

(11) **EP 2 231 763 B1**
(45) Date of publication and mention of the grant of the patent: **07.01.2015**
(21) Application number: 08867776.0
(22) Date of filing: 20.11.2008
(51) Int. Cl.: C08K 5/10

(54) **CO-PLASTICIZER SYSTEMS**
KOMBINIERTE WEICHMACHERSYSTEME
SYSTÈMES DE CO-PLASTIFIANTS

(30) Priority: 21.12.2007 US 15962 P
(43) Date of publication of application: 29.09.2010
(73) Proprietor: ExxonMobil Chemical Patents Inc., Baytown, TX 77520 (US)
(72) Inventor: GODWIN, Allen, David, Seabrook TX 77586 (US)
(74) Representative: Mareschal, Anne
(86) International application number: PCT/US2008/084147
(87) International publication number: WO 2009/085453

(56) References cited:
- EP-A- 1 354 867
- WO-A-03/029339
- WO-A-2009/070399

## Description

### CROSS REFERENCE TO RELATED APPLICATION

This application claims the benefit of U.S. Provisional Patent Application No. 61/015,962 filed on December 21, 2007, the disclosure of which is incorporated herein by reference in its entirety.

### FIELD OF THE INVENTION

The invention relates to plasticizers based on fast fusing and slow fusing plasticizers, particularly useful as a phthalate-free plasticizer for plasticizing polymer compositions, and more particularly useful for PVC-based articles.

### BACKGROUND OF THE INVENTION

Plasticizers are incorporated into a resin (usually a plastic or elastomer) to increase the flexibility, workability, or distensibility of the resin. The largest use of plasticizers is in the production of "plasticized" or flexible polyvinyl chloride (PVC) products. Typical uses of plasticized PVC include films, sheets, tubing, coated fabrics, wire and cable insulation and jacketing, flooring materials such as vinyl sheet flooring or vinyl floor tiles, adhesives, sealants, inks, and medical products such as blood bags and tubing, and the like.

Other polymer systems that use small amounts of plasticizers include polyvinyl butyral, acrylic polymers, poly(vinylidene chloride), nylon, polyolefins, and certain fluoroplastics. Plasticizers can also be used with rubber (although often these materials fall under the definition of extenders for rubber rather than plasticizers). A listing of the major plasticizers and their compatibilities with different polymer systems is provided in "Plasticizers," A. D. Godwin, in Applied Polymer Science 21st Century, edited by C. D. Craver and C. E. Carraher, Elsevier (2000); pp. 157-175.

Plasticizers can be characterized on the basis of their chemical structure. The most important chemical class of plasticizers are phthalic acid esters, which accounted for about 85% worldwide of PVC plasticizer usage in 2002. However, in the recent past there as been an effort to decrease the use of phthalate esters as plasticizers in PVC, particularly in end uses where the product contacts food, such as bottle cap liners and sealants, medical and food films, or for medical examination gloves, blood bags, and IV delivery systems, flexible tubing, and the like. For these and most other uses of plasticized polymer systems, however, a successful substitute for phthalate esters has heretofore not materialized. Typically, the best that can be achieved with substitution of the phthalate ester with an alternative material is a flexible PVC article having either reduced performance or poorer processability. Thus, heretofore efforts to make phthalate-free plasticizer systems for PVC have not proven to be entirely satisfactory, and this is still an area of intense research.

One such suggested substitute for phthalates are esters based on cyclohexanoic acid. In the late 1990's and early 2000's, various compositions based on cyclohexanoate, cyclohexanedioates, and cyclohexanepolyoate esters, were said to be useful for a range of goods from semi-rigid to highly flexible materials. See, for instance, WO 99/32427, WO 2004/046078, WO 2003/029339, WO 2004/046078, U.S. Application No. 2006-0247461, and U.S. 7,297,738.

However, one of the problems with plasticizers based on esters of cyclohexanoic acid is processability, particularly the fusion characteristics of these compounds. When a plasticized product is produced, such as a PVC product, the product should reach a temperature at some point during fabrication at which the polymer crystallites are melted. This is called the fusion temperature. In the case of PVC, depending upon the plasticizer, this temperature generally ranges from 160 to 180°C. Plasticizers which are better solvents for a given polymer will fuse at lower temperatures than those that are poorer solvents. Since many plasticized polymer products, such as flexible PVC products, are produced through continuous processes, those faster or stronger solvating plasticizers will arrive at this fusion temperature faster; hence the development of the descriptor "fast fusing". These same plasticizers are also known as strong solvating plasticizers. For most applications, the plasticizer reference standard is di-2-ethylhexyl phthalate (DEHP) as this plasticizer has been the most widely used plasticizer world wide since it was commercialized in the late 1930's. Plasticizers which fuse at lower temperatures than that required for DEHP, at the same concentration in a given polymer system, are considered fast fusing plasticizers. Likewise, plasticizers that fuse at higher temperatures than that required for DEHP, at the same concentration in a given polymer system, are considered "slow fusing" plasticizers.

The term "fast fusing plasticizer", as used herein, is defined as follows. Using the solution temperature for the C8 phthalate ester DEHP as the standard, those plasticizers with lower solution temperatures, at a given concentration and for a given polymer system, are described as "fast fusing plasticizers" or faster fusing plasticizers, while those with higher fusion temperatures are considered "slow fusing plasticizers" or slower fusing plasticizers. This assumes that the plasticizer in question is the sole plasticizer in the polymer system.

The "solution temperature" is demonstrated through the use of a simple test procedure. In this test, 48 grams of the plasticizer to be tested is mixed with 2 grams of the polymer system, such as PVC resin, at room temperature. The mixture is slowly heated, with stirring, until the PVC resin dissolves. The temperature at which the polymer system, e.g., PVC resin dissolves in the plasticizer is recorded as the "solution temperature". More specifics of the experimental design are not necessary for one of ordinary skill in the art since the important factor is how the plasticizer performs in the experiment relative to DEHP. Other test procedures that can be used to evaluate fast fusing plasticizers are the hot bench plastisol gelation method and the dynamic mechanical analysis of plastisols, both *per se* well-known in the art.

The solution temperature testing procedure gives a solution temperature of 120° C for DEHP. The 1,2 cyclohexanedicarboxylic acid of 2-ethylhexanol has a solution temperature of 130° C. The diisononyl ester of the same acid has a solution temperature of 139° C and the diisodecyl ester has a solution temperature of 149° C. The C11 ester would have a solution temperature >160° C. Faster fusing plasticizers would have solution temperatures <120° C.

Using the hot bench plastisol gelation method, which measures the temperature at which a PVC plastisol begins to gel, DEHP has a gelation temperature of 70° C. The 1,2 cyclohexanedicarboxylic acid of 2-ethylhexanol has a gelation temperature of 73° C. The diisononyl ester of the same acid has a gelation temperature of 78° C and the diisodecyl ester has a gelation temperature of 87° C. The C11 ester would have a solution temperature >95° C. Faster fusing plasticizers would have gelation temperatures <70° C.

The present inventor has recently described, along with others, fast fusing plasticizers based on cyclohexanoic acid esters of C4-C7 secondary alcohols. (Attorney Docket No. 2007EM340, U.S. Application Serial No. 60/991,314, filed November 30, 2007), and also plasticizers based on cyclohexanoic acid esters of C7-C12 secondary alcohols (Attorney Docket No. 2007EM339, U.S. Application Serial No. 60/991,307, filed November 30, 2007).

The present inventor has surprisingly discovered that the fusion characteristics of cyclohexanecarboxylic acid esters in polymer systems are improved by adding, as co-plasticizer, a non-phthalate fast fusing plasticizer; this improves the processability of the flexible PVC material while maintaining the advantages associated with the use of cyclohexanecarboxylic acid esters as plasticizers. In embodiments, this allows for plasticizer systems without the use of any phthalate ester plasticizers.

### SUMMARY OF THE INVENTION

The invention is directed to plasticizer compositions based on slow fusing plasticizing esters of cyclohexanecarboxylic acids, including cyclohexanedicarboxylic acid esters and cyclohexanepolycarboxylic acid esters, and at least one fast fusing plasticizer. The present invention provides A composition comprising at least one slow fusing plasticizer selected from esters of cyclohexanecarboxylic acid and at least one fast fusing plasticizer selected from isodecyl benzoate, 2-ethylhexyl benzoate, isooctyl benzoate, di-2-propylheptyl benzoate, dibutyl terephthalate, dibenzoate esters of dipropylene glycol, dibenzoate esters of diethylene glycol, C4-C7 aliphatic alcohol esters of cyclohexanoates, actyl tributyl citrate, acetyl trihexyl citrate, butyryl tributyl citrate, and mixtures thereof wherein there is at least 65 wt% fast fusing plasticizer based on the total weight of plasticizer present.

In embodiments, the compositions comprise at least one polymerizable polymer, such as PVC, polyurethanes, acrylics, and polyolefins. Particularly preferred are PVC compositions.

In preferred embodiments, compositions according to the invention comprise at least one slow fusing plasticizer selected from at least one cyclohexane dioate or cyclohexanoate trioate esters based on at least one alcohol selected from C8 to C11 aliphatic primary alcohols. Particularly preferred are the diisononyl and/or diisodecyl and/or di-2-propylheptyl esters.

In other preferred embodiments, the slow fusing plasticizers are cyclohexanecarboxylic acid esters based on the 1,2- or 1,4 cyclohexandedicarboxylic acid esters.

The fast fusing plasticizer is selected from fast fusing esters based on di-butyl terephthalates, C8 and C10 mono benzoates, dibenzoates esters of ethylene glycol or dipropylene glycol, C4-C7 cyclohexanoates, alkyl sulfonic acid esters of phenol, aliphatic dibutyrate esters, or citrate esters of C4-C6 primary alcohols.

In other embodiments, these plasticizing systems comprising a slow fusing plasticizer based on at least one cyclohexane dicarboxylic acid ester and at least one fast fusing plasticizer plastisol formulations to provide low viscosity formulations with improved viscosity stabilty and improved processability.

It is an object of the invention to provide, in embodiments, polymer compositions having high processability.

It is another object of the invention, in embodiments, to provide polymer systems having improved low temperature flexibility, improved stability with respect to degradation caused by exposure to UV, heat, cold, and/or migration, and improved plastisol stability.

It is still another object of the invention to provide an improved plastisols with lower viscosity and processability.

It is an object of the present invention to provide plasticized polymer compositions, such as PVC, polyurethanes, acrylics, and polyolefins compositions, including at least one plasticizer system based on slow fusing cyclohexanecarboxylic acid esters and at least one non-phthalate fast fusing plasticizer.

It is another object of the invention to provide useful articles comprising phthalate-free plasticized polymer systems and article made therefrom, particularly for PVC-based polymer systems.

These and other objects, features, and advantages will become apparent as reference is made to the following detailed description, preferred embodiments, examples, and appended claims.

### DETAILED .DESCRIPTION OF THE INVENTION

According to the invention, there is a plasticizing system comprising at least one slow fusing ester of cyclohexanecarboxylic acids and at least one fast fusing plasticizer. In preferred embodiments, the plasticizing system does not contain phthalate, i.e., it is phthalate-free. The plasticizing system may be essentially phthalate-free, meaning there may be some inevitable impurity of phthalates due to the process by which the cyclohexanecarboxylic acid ester is made (such as by hydrogenation of a phthalic acid analog before esterification or phthalate ester analog after esterification) or the system may be completely free of phthalates, meaning that the composition consists of no phthalates, to the extent possible by available technology.

In embodiments, there is also a composition comprising a plasticizable polymer and said plasticizing system. In preferred embodiments, the polymers may be selected from any known plasticizable polymer, preferably PVC, polyvinyl butyrals, polystyrenes, polyurethanes, acrylics, brominated rubbers, chlorinated rubbers, and polyolefins. Preferred polyolefins include polypropylene, EDPM, thermoplastic vulcanizates and thermoplastic elastomers.

In embodiments, the compositions including said plasticizable polymer comprise a plasticizing amount of said plasticizing system. The term "plasticizing amount" means an amount sufficient for the purpose of processing the polymer into a final article (such as a toy) or intermediate article (such as a pellet or powder) or the amount of plasticizer required to provide the finished article with the desired amount of softness or flexibility. One of skill in the art in possession of the present disclosure may determine the appropriate amount without more than routine experimentation. Minimum and maximum amounts suitable will vary depending on the plasticizer system, polymerizable polymer(s), additives, and process selected, among other reasons.

The plasticizer system comprises one or more fast fusing plasticizers and one or more slow fusing plasticizers. The terms "fast fusing plasticizer" and "slow fusing plasticizer" have been defined above. The fast fusing plasticizer may be used in amounts greater than the total concentration of the cyclohexanecarboxylic acid ester.

The relative proportions of the plasticizers that are used will depend upon the desired properties of the processing and the final product. In embodiments, it is preferred to use at least 65 wt %, in other embodiments at least 70 wt %, in other embodiments at least 75 wt %, in other embodiments at least 80 wt %, in other embodiments at least 85 wt %, in other embodiments at least 90 wt %, of the fast fusing plasticizer(s), based on the total weight of plasticizer present. The remainder of the plasticizer system is preferably the at least one slow fusing cyclohexanecarboxylic acid ester, although other plasticizers may be included, such as other slow fusing plasticizers and/or even traditional phthalic acid ester plasticizers.

In embodiments, the plasticizer system will comprise no more than 35 wt% or in other embodiments no more than 30 wt%, or in other embodiments no more than 25 wt%, or in other embodiments no more than 20 wt%. It is preferred to use at least 5 wt% of the slow fusing cyclohexanecarboxylic acid ester(s), however in other embodiments preferred ranges are from 0.01 wt %, more preferably 5 wt %, in other embodiments 10 wt %, in other embodiments 20 wt %, in other embodiments 30 wt %. The fast fusing plasticizers may be present up to 95 wt %, in other embodiments 90 wt %, in other embodiments 80 wt %, in other embodiments 70 wt %. DEHP (which, being the standard, is neither a fast nor a slow fusing plasticizer) may be used, along with phthalate ester plasticizer, and also slow fusing plasticizers other than one based on cyclohexanecarboxylic acid esters.

In the plasticizer system comprising one or more fast fusing plasticizers and one or more slow fusing plasticizers, the slow fusing plasticizers are selected from esters of cyclohexanecarboxylic acids, preferably cyclohexanecarboxylic acid esters of C8 to C11 aliphatic alcohols, more preferably cyclohexanedicarboxylic acid esters of C8 to C11 aliphatic alcohols, which in embodiments will be C8-C11 aliphatic primary alcohols, more preferably 1,2- cyclohexanedicarboxylic acid esters of C8 to C11 aliphatic alcohols, more preferably 1,2 cyclohexanedicarboxylic acid esters of isononanol.

### Slow fusing plasticizer based on cyclohexanecarboxylic acid esters.

The term "cyclohexanecarboxylic acid" (as used herein is intended to include the cyclohexane group having at least two carboxylic acid functional groups attached directly to the C6 ring, thus including dicarboxylic acid, tricarboxylic acids, and so on. All possible isomers of polycarboxylic acids are envisioned to be useful, however in preferred embodiments, the dicarboxylic acid isomer with the carboxylic acid groups in the 1,2-substitution position is the preferred isomer. Mixtures of isomers are also envisioned.

Note that cyclohexanecarboxylic acid esters may also be referred to a hexahydrophthalate esters.

The alcohol moiety of the cyclohexanecarboxylic acid ester is preferably selected from C8-C11 aliphatic alcohols, preferably aliphatic primary alcohols. The alcohol moiety may be straight or branched or a mixture thereof.
Blends of branched and linear alcohols, such as mixtures of C8 and C9 alcohols, each independently selected from branched and/or linear alcohols, or C9 and C10 alcohols, each independently selected from branched and/or linear alcohols, or C10 and C11 alcohols, each independently selected from branched and/or linear alcohols, or C9 and C11 alcohols, each independently selected from branched and/or linear alcohols, or C8, C9, and C10 alcohols, each independently selected from branched and/or linear alcohols, or C9, C10, and C11 alcohols, each independently selected from branched and/or linear alcohols, or C8 and C10 alcohols, each independently selected from branched and/or linear alcohols, and so **on, to** encompass every possible mixture of C8-C11 alcohols, each independently selected from branched and/or linear alcohols, in each case wherein said alcohols are preferably primary alcohols, are also useful to make these plasticizers.

In embodiments the branched alcohol moiety has an overall branching (i.e., an average branching), as measured by NMR techniques, less than 1.8 branches per molecule, more preferably less than 1.5 branches per molecule, .and still more preferably less than 1.2 branches per molecule. In preferred embodiments, the lower limit on branching is 0.8 branches per chain, on average. The NMR technique used to measure branching is per se known in the art. See, for instance, WO 2006012989.

These slow fusing plasticizers based on cyclohexanoate esters can be prepared from either esterification of the cyclohexane acids, diacids, or anhydrides with one or more of the desired alcohols or they can be prepared from hydrogenation of alcohol esters made from the corresponding aromatic acids or aromatic anhydrides such as phthalic anhydride, phthalic acid, isophthalic acid, terephthalic acid, or trimellitic anhydride. The esters of this invention can also be prepared by the esterification of cyclohexane polyacids and/or anhydride. See also WO2004/046078. In embodiments, the esters according to the invention are prepared from the catalytic hydrogenation of the corresponding esters prepared from the same alcohols and phthalic acid or anhydride, and/or terephthalatic acid and/or dimethyl terephthalate, wherein the acid moiety is hydrogenated after esterification with the alcohol. The 1,2-cyclohexane dicarboxylic acid anhydride or hexahydrophthalic anhydride, can be prepared through a direct route, such as the Diels Alder synthesis, using butadiene and maleic anhydride, followed by hydrogenation. In other embodiments, the esters according to the invention can be prepared by esterification of hexahydrophthalic anhydride and/or hexahydroterephthalic acid with alcohols. In other embodiments, the ester according to the invention can be prepared by direct esterification of C8-C11 alkenes with 1,2 hexahydrophthalic acid.

Numerous esterification techniques are known in the art, e.g., such as disclosed in Volume 9 of the Kirk-Othmer Encyclopedia of Chemical Technology, Fourth Edition (1994), pp. 762-768. Preferred catalysts include titanium organometallic catalysts such as those per se well known in the art, e.g., U.S. 6,355,817 and U.S. Patent Application No. 20050038283.

### Fast fusing plasticizers

Many fast fusing plasticizers are per se well-known in the art, however non-phthalate fast fusing plasticizers, which are preferred in embodiments of the invention, are generally less well-known. The may be selected from benzoic acid esters, particularly the benzoic acid esters or isodecanol or 2-ethylhexanol or 2-propylheptanol, dibenzoate esters of diethylene glycol or dipropylene glycol, certain low molecular weight esters of cyclohexanecarboxylic acid such as C4-C7 aliphatic secondary alcohol esters, low molecular weight terephthalates prepared from butanols, certain alkyl sulfonic acid esters, certain aliphatic diisobutyrate esters, certain citric acid esters of butanol or hexanol, and mixtures of the fast fusing plasticizers in the aforementioned group.

More preferred fast fusing plasticizers include hydrogenated forms of butyl benzyl phthalate (BBP), diisoheptyl phthalate, dihexyl phthalate, and dibutyl phthalate, and also dibutyl terephthalate, dibenzoate esters of diethylene glycol or dipropylene glycol, benzoate esters of C8 or C10 branched primary alcohols, various alkyl sulfonic acid esters of phenol, cyclohexanediacid esters of C4-C7 aliphatic secondary alcohols, acetyl tributyl citrate, acetyl trihexyl citrate, and butyryl tributyl citrate.

Although the preferred plasticizer system of the invention is phthalate-free, in some cases it may be suitable to include certain amounts of phthalates, such as fast fusing plasticizers selected from butyl benzyl phthalate (BBP), diisoheptyl phthalate, dihexyl phthalate, dibutyl phthalate, and mixtures thereof.

The useful articles made from compositions comprising a plasticizable polymer and said plasticizing system can be used to give increased product life in products designed for outdoor applications such as geomembranes, or tarpaulins, or roofing membranes or automotive parts. For PVC plastisols the esters of this invention give lower plastisol viscosity and improved processability versus those prepared plasticizers from cyclohexanecarboxylic acid esters alone, particularly the di-isononyl cyclohexanediacid ester or the di-2-ethylhexyl cyclohexanediacid ester or the di-2-propylheptyl cyclohexanediacid ester.

Plasticized polymer compositions according to embodiments of the invention offer advantages in other areas, such as in toy manufacturing, where the low viscosity and fusion properties would be an advantage over most alternatives, in automotive interior trim products because of their excellent UV stability, in extruded materials such as wire jacketing or tubing or hose or floor mats where the improved solvency and reduced fusion temperatures give high carity products with low surface defects, in PVC film for uses such as wall paper or food containers or medical devices or stationary products, and in injection molded products for uses such as oxygen masks or cap liners or shoe soles. This is especially beneficial as a non-yellowing viscosity modifier in vinyl sheet flooring manufacturing. In embodiments, the plasticizing system contributes to improve stain resistance. In a particularly preferred embodiment, the plasticizing system is useful as a process aid in the production of PVC toys through rotomolding and casting processes.

In embodiment, the plasticizing system comprising slow fusing cyclohexanoate esters and at least one fast fusing plasticizer is mixed with PVC in the amount of from 10 phr to 100phr, where the descriptor phr refers to parts per hundred. Here, for example, 10 phr would refer to the weight of additive in pounds or kilos, in this case the plasticizer, added to 100 pounds or kilos of the PVC polymer.

In embodiments, the plasticizing system comprising slow fusing cyclohexanoate esters and at least one fast fusing plasticizer will further comprise additives such as calcium carbonate fillers, Ca/Zn or Ba/Zn stabilizers, epoxidized soy bean oil, lubricants, pigments and dies or other colorants, antioxidants, and other stabilizers.

The PVC compositions of this invention can be processed into products through rotomolding, dipping, spreading, molding, extrusion, calendering, and injection molding.

Temperature can be a limitation in coating products such as paper or carpet fibers where higher fusing temperatures found with C8-C 11 cyclohexanedicarboxylic acid esters can cause yellowing or decomposition. The plasticizer combination of this invention allows these materials to be used without experiencing thermal decomposition. Lower operating temperatures are also advantaged in having lower heating costs, for example in automotive underbody sealants and coatings. Faster fusing also yields advantages in processing speeds, such as coated fabrics, sheet flooring, glove dipping, underbody automotive sealants, and rotomolding.

Reduction is plastisol viscosity is desired as it allows for coating processes to operate at faster line speeds; this is important to the production of vinyl sheet flooring, coated fabrics, and wall paper.

The invention is applicable across the range of plasticized polyvinyl chloride materials. It is applicable to the production of semi-rigid polyvinyl chloride compositions, which preferably contain from about 10 to about 40 parts, more preferably 15 to 35 parts, still more preferably 20 to 30 parts of plasticizer per 100 parts of polyvinyl chloride. The invention is also applicable to flexible polyvinyl chloride compositions which preferably contain from about 40 to about 70 parts, more preferably 44 to 65 parts, still more preferably from 48 to 55 parts per 100 parts of polyvinyl chloride, and also to the highly flexible compositions, which preferably contain from about 70 to about 110 parts, more preferably 80 to 100 parts, still more preferably 90 to 100 parts of plasticizer per 100 parts of polyvinyl chloride. As used herein, parts are given on a weight basis.

The semi-rigid compositions are typically used for the production of pipes, some wire and cable coatings, floor tiles, window shades, films, blood bags and medical tubing. Flexible compositions are typically used for the production of sheeting, upholstery, medical tubing, garden hoses, pool liners, toys, sealants, coatings, water beds and the like. Very flexible compositions are used in the production of coated cloth, toys, shoe soles and the like. The esters of cyclohexanepolycarboxylic acid according to the invention, i.e., wherein at least one of the alcohol groups is selected from at least one C8-C11 aliphatic alcohols, are particularly useful in the production of medical articles such as blood bags and medical tubing and in toys and materials used for food contact such as bottle caps and films where di-2-ethyhexyl phthalate has traditionally been used and there are some concerns about its toxicity.

In a further embodiment, the invention provides roofing, tarpaulins, tents, films, sheeting, floor covering, shoes and automobile interior fabrics and molded products obtained from a plasticized polyvinyl chloride composition, preferably containing from about 20 to about 100 parts by weight, more preferably 30 to 90 parts by weight, still more preferably 35 to 70 parts by weight, yet still more preferably 40 to 60 parts by weight, of a plasticizer composition containing one or more cyclohexanemono- and/or poly-carboxylic acid esters according to the invention, i.e., at least one C8-C111 alcohol ester of a cyclohexanecarboxylic acid, per 100 parts of polyvinyl chloride.

One widespread use of polyvinyl chloride is as a plastisol. A plastisol is a fluid or a paste consisting of a mixture of polyvinyl chloride and a plasticizer optionally containing various additives. A plastisol can be used to produce layers of polyvinyl chloride which are then fused to produce coherent articles of flexible polyvinyl chloride. Plastisols can be placed in cavity molds, then heated, to produce molded flexible PVC articles such as toys. Plastisols can be used to make gloves by dipping molds into the plastisol, and then heating. Plastisols are useful in the production of flooring, tents, tarpaulins, coated fabrics such as automobile upholstery, in car underbody coatings, in moldings and other consumer products. Plastisols are also used in, footwear, fabric coating, toys, flooring products and wallpaper. Plastisols typically contain about 40 to about 200 parts by weight, more typically 50 to 150 parts by weight, more typically 70 to 120 parts by weight of plasticizer comprising fast fusing and slow fusing plasticizers based on at least on C8-C11 cyclohexanecarboxylic acid esters per 100 parts of polyvinyl chloride.

Plastisols are usually made from polyvinyl chloride that has been produced by emulsion polymerization or micro suspension polymerization. The plastisol may be produced by the manufacturer of the polyvinyl chloride or a compounder and shipped to the user in fluid form. Alternatively the plastisol may be produced by the user. In either instance, although particularly when the plastisol is produced by the manufacture of the polyvinyl chloride or a compounder, it is important that the plastisol viscosity be stable over time.

In a further embodiment, the present invention provides a process for the production of flexible polyvinyl chloride comprising forming a layer from a plastisol containing from 40 to 200 parts by weight preferably 50 to 150 parts by weight, more preferably 70 to 120 parts by weight of a plasticizer composition containing one or more slow fusing C8-C11 cyclohexanepolycarboxylic acid esters and at least one fast fusing plasticizer per 100 parts by weight of polyvinyl chloride, and subsequently fusing the layer by the application of heat.

In a further embodiment, the invention provides a way to produce flexible PVC electrical insulation and jacketing materials. Higher temperature insulation materials rated for 90°-105° products may include plasticizer blends of the higher molecular weight C8-C11 aliphatic alcohol esters of 1,2,4 cyclohexanetricarboxylic acid with fast fusing plasticizers.

Trade names used herein are indicated by a ™ symbol or ® symbol, indicating that the names may be protected by certain trademark rights, e.g., they may be registered trademarks in various jurisdictions.

All patents and patent applications, test procedures (such as ASTM methods, UL methods, and the like), and other documents cited herein are fully incorporated by reference to the extent such disclosure is not inconsistent with this invention and for all jurisdictions in which such incorporation is permitted.

When numerical lower limits and numerical upper limits are listed herein, ranges from any lower limit to any upper limit are contemplated. While the illustrative embodiments of the invention have been described with particularity, it will be understood that various other modifications will be apparent to and can be readily made by those skilled in the art without departing from the spirit and scope of the invention.

## Claims

1. A composition comprising at least one slow fusing plasticizer selected from esters of cyclohexanecarboxylic acid and at least one fast fusing plasticizer selected from isodecyl benzoate, 2-ethylhexyl benzoate, isooctyl benzoate, di-2-propylheptyl benzoate, dibutyl terephthalate, dibenzoate esters of dipropylene glycol, dibenzoate esters of diethylene glycol, C4-C7 aliphatic alcohol esters of cyclohexanoates, acetyl tributyl citrate, acetyl trihexyl citrate, butyryl tributyl citrate, and mixtures thereof, wherein there is at least 65 wt% fast fusing plasticizer based on the total weight of plasticizer present.

2. The composition of Claim 1, further comprising a plasticizable polymer.

3. The composition according to any one of the preceding claims, wherein said plasticizable polymer is selected from polyvinyl chloride, polyvinyl acetate, polyvinyl butyral, polystyrene, polyurethanes, acrylics, chlorinated rubber, brominated rubber, polyolefins, and mixtures thereof.

4. The composition according to Claim 3, wherein said polyolefins are selected from polypropylene, EDPM, thermoplastic elastomers, thermoplastic vulcanizates, and mixtures thereof.

5. The composition according to any one of the preceding claims, wherein said cyclohexanecarboxylic acid includes at least one cyclohexanepolycarboxylic acid.

6. The composition according to any one of the preceding claims, wherein said cyclohexanepolycarboxylic acid is prepared by a method selected from (a) hydrogenating at least one of phthalic acid, phthalic anhydride, isophthalic acid, isophthalic anhydride, terephthalatic acid, dimethyl terephthalate, and mixtures thereof, and esterifying the resulting product with at least one aliphatic alcohol, and (b) esterifying at least one of phthalic acid, phthalic anhydride, isophthalic acid, isophthalic anhydride, terephthalatic acid, dimethyl terephthalate, and mixtures thereof with an aliphatic alcohol.

7. The composition according to any one of Claims 1-6, wherein said cyclohexanepolycarboxylic acid is prepared by the Diels Alder condensation of maleic anhydride and butadiene, wherein the acid moiety is hydrogenated before or after esterification with the secondary alcohol.

8. The composition according to any one of the preceding claims, comprising PVC.

9. The composition according to any one of the preceding claims, wherein the cyclohexanepolycarboxylic acid esters are prepared from at least one C8 to C11 aliphatic alcohol.

10. The composition according to any one of the preceding claims, wherein the cyclohexanepolycarboxylic acid esters are prepared from at least one C8 to C11 aliphatic primary alcohol.

11. A plastisol composition comprising a PVC resin and the composition according to any one of the preceding claims.

12. The composition according to any one of the preceding claims, optionally further comprising at least one additive selected from stabilizers, fillers, and colorants, wherein the total plasticizer concentration is in the amount of 40 phr to 200 phr.

13. A flexible PVC article comprising a PVC resin and a composition according to any one of Claims 1-11.

14. A phthalate-free article comprising PVC, wherein said PVC has been plasticized by a plasticizer system comprising at least one fast fusing plasticizer as defined in claim 1 and at least one slow fusing cyclohexanecarboxylic acid ester of C8-C11 aliphatic primary alcohols.

## Patentansprüche

1. Zusammensetzung, die mindestens einen langsam schmelzenden Weichmacher ausgewählt aus Estern von Cyclohexancarbonsäure und mindestens einen schnell schmelzenden Weichmacher ausgewählt aus Isodecylbenzoat, 2-Ethylhexylbenzoat, Isooctylbenzoat, Di-2-Propylheptylbenzoat, Dibutylterephthalat, Dibenzoatestern von Dipropylenglykol, Dibenzoatestern von Diethylenglykol, aliphatischen C₄-C₇-Alkoholestern von Cyclohexanoaten, Acetyltributylcitrat, Acetaltrihexylcitrat, Butyryltributylcitrat und Mischungen davon umfasst, wobei mindestens 65 Gew.-% schnell schmelzender Weichmacher vorhanden ist, bezogen auf das Gesamtgewicht an vorhandenem Weichmacher.

2. Zusammensetzung nach Anspruch 1, die ferner ein plastifizierbares Polymer umfasst.

3. Zusammensetzung nach einem der vorhergehenden Ansprüche, wobei das plastifizierbare Polymer ausgewählt ist aus Polyvinylchlorid, Polyvinylacetat, Plyvinylbutyral, Polystyrol, Polyurethanen, Acrylverbindungen, chloriertem Kautschuk, bromiertem Kautschuk, Polyolefinen und Mischungen davon.

4. Zusammensetzung nach Anspruch 3, wobei die Polyolefine ausgewählt sind aus Polypropylen, EDPM, thermoplastischen Elastomeren, thermoplastischen Vulkanisaten und Mischungen davon.

5. Zusammensetzung nach einem der vorhergehenden Ansprüche, wobei die Cyclohexancarbonsäure mindestens eine Cyclohexanpolycarbonsäure umfasst.

6. Zusammensetzung nach einem der vorhergehenden Ansprüche, wobei die Cyclohexanpolycarbonsäure durch ein Verfahren hergestellt worden ist, das ausgewählt ist aus (a) Hydrierung von mindestens einem von Phthalsäure, Phthalsäureanhydrid, Isophtalsäure, Isophtalsäureanhydrid, Terephthalsäure, Dimethylterephthalat und Mischungen davon und Veresterung des entstehenden Produkts mit mindestens einem aliphatischen Alkohol und (b) Veresterung von mindestens einem von Phthalsäure, Phthalsäureanhydrid, Isophthalsäure, Isophthalsäureanhydrid, Terephthalsäure, Dimethylterephthalat und Mischungen davon mit einem aliphatischen Alkohol.

7. Zusammensetzung nach einem der Ansprüche 1 bis 6, wobei die Cyclohexanpolycarbonsäure durch die Diels-Alder-Kondensation von Maleinsäureanhydrid und Butadien hergestellt worden ist, wobei der Säurerest vor oder nach der Veresterung mit dem sekundären Alkohol hydriert wird.

8. Zusammensetzung nach einem der vorhergehenden Ansprüche, die PVC enthält.

9. Zusammensetzung nach einem der vorhergehenden Ansprüche, wobei die Cyclohexanpolycarbonsäureester aus mindestens einem aliphatischen C₈-C₁₁-Alkohol hergestellt worden sind.

10. Zusammensetzung nach einem der vorhergehenden Ansprüche, wobei die Cyclohexanpolycarbonsäureester aus mindestens einem aliphatischen primären C₈-C₁₁-Alkohol hergestellt worden sind.

11. Plastisolzusammensetzung umfassend ein PVC-Harz und die Zusammensetzung gemäß einem der vorhergehenden Ansprüche.

12. Zusammensetzung nach einem der vorhergehenden Ansprüche, die gegebenenfalls ferner mindestens ein Additiv ausgewählt aus Stabilisatoren, Füllstoffen und Färbemitteln enthält, wobei die Gesamtweichmacherkonzentration im Bereich von 40 phr bis 200 phr liegt.

13. Flexibler PVC-Gegenstand, der ein PVC-Harz und eine Zusammensetzung gemäß einem der Ansprüche 1 bis 11 umfasst.

14. Phthalatfreier Gegenstand, der PVC umfasst, wobei das PVC durch ein Weichmachersystem plastifiziert worden ist, das mindestens einen schnell schmelzenden Weichmacher, wie in Anspruch 1 definiert, und mindestens einen langsam schmelzenden Cyclohexancarbonsäureester von aliphatischen primären C₈-C₁₁-Alkoholen umfasst.

## Revendications

1. Composition comprenant au moins un plastifiant à fusion lente choisi parmi les esters d'acide cyclohexanecarboxylique et au moins un plastifiant à fusion rapide choisi parmi le benzoate d'isodécyle, le 2-benzoate d'éthylhexyle, le benzoate d'isooctyle, le benzoate de di-2-propylheptyle, le téréphtalate de dibutyle, les esters dibenzoate de dipropylèneglycol, les esters dibenzoate de diéthylèneglycol, les esters de cyclohexanoates d'alcools aliphatiques en C₄-C₇, l'acétylcitrate de tributyle, l'acétylcitrate de trihexyle, le butyrylcitrate de tributyle, et des mélanges de ceux-ci, dans laquelle il y a au moins 65 % en poids de plastifiant à fusion rapide par rapport au poids total de plastifiant présent.

2. Composition selon la revendication 1, comprenant en outre un polymère plastifiable.

3. Composition selon l'une quelconque des revendications précédentes, dans laquelle ledit polymère plastifiable est choisi parmi le poly(chlorure de vinyle), le poly(acétate de vinyle), le polyvinylbutyral, le polystyrène, les polyuréthanes, les acryliques, le caoutchouc chloré, le caoutchouc bromé, les polyoléfines, et des mélanges de ceux-ci.

4. Composition selon la revendication 3, dans laquelle lesdites polyoléfines sont choisies parmi le polypropylène, l'EDPM, les élastomères thermoplastiques, les vulcanisats thermoplastiques, et des mélanges de ceux-ci.

5. Composition selon l'une quelconque des revendications précédentes, dans laquelle ledit acide cyclohexanecarboxylique comprend au moins un acide cyclohexanepolycarboxylique.

6. Composition selon l'une quelconque des revendications précédentes, dans laquelle ledit acide cyclohexanepolycarboxylique est préparé par un procédé choisi parmi (a) l'hydrogénation d'au moins un des composés que sont l'acide phtalique, l'anhydride phtalique, l'acide isophtalique, l'anhydride isophtalique, l'acide téréphtalique, le téréphtalate de diméthyle, et des mélanges de ceux-ci, et l'estérification du produit résultant avec au moins un alcool aliphatique, et (b) l'estérification d'au moins un des composés que sont l'acide phtalique, l'anhydride phtalique, l'acide isophtalique, l'anhydride isophtalique, l'acide téréphtalique, le téréphtalate de diméthyle, et des mélanges de ceux-ci, avec un alcool aliphatique.

7. Composition selon l'une quelconque des revendications 1-6, dans laquelle ledit acide cyclohexanepolycarboxylique est préparé par condensation de Diels Aider d'anhydride maléique et de butadiène, dans laquelle le groupement acide est hydrogéné avant ou après l'estérification avec l'alcool secondaire.

8. Composition selon l'une quelconque des revendications précédentes, comprenant du PVC.

9. Composition selon l'une quelconque des revendications précédentes, dans laquelle les esters d'acide cyclohexanepolycarboxylique sont préparés à partir d'au moins un alcool aliphatique en C₈ à C₁₁.

10. Composition selon l'une quelconque des revendications précédentes, dans laquelle les esters d'acide cyclohexanepolycarboxylique sont préparés à partir d'au moins un alcool primaire aliphatique en C₈ à C₁₁.

11. Composition de plastisol comprenant une résine de PVC et la composition selon l'une quelconque des revendications précédentes.

12. Composition selon l'une quelconque des revendications précédentes, comprenant éventuellement en outre au moins un additif choisi parmi des stabilisants, des charges et des colorants, dans laquelle la concentration totale de plastifiant est en quantité de 40 phr à 200 phr.

13. Article en PVC souple comprenant une résine de PVC et une composition selon l'une quelconque des revendications 1-11.

14. Article sans phtalate comprenant du PVC, dans lequel ledit PVC a été plastifié par un système plastifiant comprenant au moins un plastifiant à fusion rapide tel que défini dans la revendication 1 et au moins un ester d'acide cyclohexanecarboxylique d'alcools primaires aliphatiques en C₈-C₁₁ à fusion lente.
